# FASCICULE DE BREVET EUROPEEN

(11) **EP 2 583 900 B1**
(45) Date de publication et mention de la délivrance du brevet: **30.03.2016**
(21) Numéro de dépôt: 12188622.0
(22) Date de dépôt: 16.10.2012
(51) Int. Cl.: B64D 29/02, B64C 7/02, B64D 33/04, B64D 27/12

(54) **Carénage aérodynamique arrière pour dispositif d'accrochage d'un moteur d'aéronef, comprenant un bouclier thermique capable de se dilater librement**
Aerodynamische Heckverkleidung für eine Triebwerksaufhängung, welche ein Hitzeschild umfasst, das sich frei ausdehnen kann
Rear aerodynamic fairing for an aircraft engine attachment device, comprising a heat shield capable of expanding freely

(30) Priorité: 19.10.2011 FR 1159427
(43) Date de publication de la demande: 24.04.2013
(73) Titulaire: Airbus Operations (Société par actions simplifiée), 31060 Toulouse (FR)
(72) Inventeur: Journade, Frédéric, 31100 TOULOUSE (FR)
(74) Mandataire: Ilgart, Jean-Christophe

(56) Documents cités:
- EP-B1- 2 190 739
- US-A1- 2007 102 494
- US-A1- 2008 217 467
- US-A1- 2011 011 972

## Description

### DOMAINE TECHNIQUE

La présente invention se rapporte à un carénage aérodynamique arrière pour dispositif d'accrochage d'un moteur destiné à être interposé entre une voilure d'aéronef et le moteur concerné, ce carénage étant également appelé « bouclier » ou « APF » (de l'anglais « Aft Pylon Fairing »).

L'invention peut être utilisée sur tout type d'aéronef équipé de turboréacteurs ou de turbopropulseurs.

Ce type de dispositif d'accrochage, également appelé mât d'accrochage ou « EMS » (de l'anglais « Engine Mounting Structure »), permet de suspendre un turbomoteur au-dessous de la voilure de l'aéronef, ou bien de monter ce turbomoteur au-dessus de cette même voilure.

### ETAT DE LA TECHNIQUE ANTERIEURE

Un tel dispositif d'accrochage est en effet prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales de rigidification.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur. Dans l'art antérieur, ce dispositif de reprise comprend habituellement deux bielles latérales raccordées d'une part à une partie arrière du carter de soufflante du turbomoteur, et d'autre part à une attache arrière fixée sur le carter central de ce dernier.

De la même façon, le dispositif d'accrochage comporte également une autre série d'attaches constituant un système de montage interposé entre la structure rigide et la voilure de l'aéronéf, ce système étant habituellement composé de deux ou trois attaches.

Par ailleurs, le mât est pourvu d'une pluralité de structures secondaires assurant la ségrégation et le maintien des systèmes tout en supportant des éléments de carénage aérodynamique, ces derniers prenant généralement la forme d'assemblages de panneaux rapportés sur les structures. De façon connue de l'homme du métier, les structures secondaires se différencient de la structure rigide par le fait qu'elles ne sont pas destinées à assurer le transfert des efforts provenant du moteur et devant être transmis vers la voilure de l'aéronef.

Parmi les structures secondaires, on compte le carénage aérodynamique arrière, également dénommé APF, qui dispose d'une pluralité de fonctions parmi lesquelles on note la formation d'une barrière thermique ou anti-feu, et la formation d'une continuité aérodynamique entre la sortie du moteur et le mât d'accrochage.

Le carénage aérodynamique arrière prend généralement la forme d'un caisson comprenant deux panneaux latéraux assemblés entre eux par des nervures intérieures transversales de rigidification espacées les unes des autres selon une direction longitudinale du carénage, ainsi qu'un plancher de protection thermique. Il est précisé que ce caisson peut ne pas être fermé à l'opposé du plancher de protection thermique, à savoir en partie supérieure lorsque le moteur est destiné à être suspendu sous la voilure de l'aéronef, étant donné que c'est à cet endroit qu'il vient se raccorder sur les autres structures du mât.

Le plancher de protection thermique est pourvu d'une surface extérieure destinée à être épousée par un flux primaire du moteur qu'il délimite, alors que les panneaux latéraux sont quant à eux prévus pour être épousés extérieurement par un flux secondaire du moteur, en raison de leur implantation dans le canal annulaire de flux secondaire du moteur, et/ou en sortie de celui-ci.

Dans certaines solutions de l'art antérieur, les extrémités opposées du plancher de protection thermique sont montées fixement respectivement sur les deux panneaux latéraux qui épousent également les nervures transversales. Alternativement ou simultanément, le plancher est fixé sur les nervures transversales.

Dans cette configuration, le plancher de protection thermique est au contact du flux primaire de température très élevée, ce qui le conduit à se déformer fortement par dilatation thermique. Cependant, ses encastrements sur les extrémités inférieures des deux panneaux latéraux et/ou sur les extrémités inférieures des nervures transversales engendrent de fortes contraintes thermomécaniques au sein du plancher et des éléments auxquels il est encastré, ce qui est bien évidemment néfaste pour ces éléments.

Il est noté que ce phénomène d'introduction de fortes contraintes thermomécaniques due à l'importante dilatation thermique du plancher est accentuée par le fait que les panneaux latéraux baignent dans le flux secondaire relativement froid, de sorte qu'ils ne subissent que très peu de déformation par dilatation thermique. Néanmoins, ils rencontrent tout de même une déformation sensible provoquée par la mise en contraintes résultant de la dilatation du plancher auquel ils sont directement et rigidement raccordés, ce qui conduit à dégrader leur forme aérodynamique, et qui, d'une façon plus générale, provoque la détérioration de la qualité aérodynamique globale du carénage. Naturellement, une telle dégradation est pénalisante en termes de traînée parasite engendrée.

Il est précisé que la qualité aérodynamique du carénage se trouve également dégradée par les déformations localisées du plancher de protection thermique qui ne peut se dilater librement, sans contrainte, en raison de son encastrement dans certains éléments du carénage telles que les nervures intérieures, comme cela a été décrit ci-dessus. Le flux primaire étant un jet très rapide, les déformations localisées rencontrées au niveau du plancher produisent en effet une traînée parasite sensiblement importante.

Enfin, il est noté que les nervures intérieures transversales, qui ne sont elles pas directement épousées par le flux secondaire sensiblement frais en raison de leur localisation à l'intérieur du caisson, peuvent être sensibles à l'apport de chaleur provenant du plancher de protection thermique avec lequel elles sont en contact. Ainsi, pour leur permettre de remplir leur fonction de maintien mécanique des différents éléments du carénage en forme de caisson, il peut être nécessaire d'avoir recours à un surdimensionnement de ces nervures et/ou à l'utilisation, pour leur fabrication, de matériaux coûteux présentant de bonnes propriétés mécaniques en températures.

Pour répondre aux problèmes qui viennent d'être mentionnés, il a été proposé de déporter le plancher de protection thermique, afin de l'éloigner des panneaux latéraux et des nervures transversales. Cette réalisation est notamment connue des documents EP 2 190 739, qui est consideré l'état de la technique la plus proche, et US12/677139.

Le plancher est en effet déporté des nervures intérieures transversales à l'aide des voiles longitudinaux, étant entendu que ce sont ces mêmes voiles qui assurent indirectement le montage du plancher sur les nervures. Ainsi, le plancher n'est plus monté directement sur les nervures, ce qui lui permet de se déformer plus librement par dilatation thermique suite à l'importante chaleur dégagée par le flux primaire épousant ce plancher.

Néanmoins, il subsiste un besoin d'optimisation de la conception du carénage, de manière à ce que ce dernier permette une plus grande liberté de dilatation du plancher de protection thermique dans la direction longitudinale.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un carénage aérodynamique arrière pour dispositif d'accrochage d'un moteur destiné à être interposé entre une voilure d'aéronef et ledit moteur, ledit carénage formant caisson comprenant une structure principale s'étendant selon une direction longitudinale (X) dudit carénage et intégrant deux panneaux latéraux reliés entre eux, le carénage comprenant en outre un plancher de protection thermique pourvu d'une surface extérieure destinée à être épousée par un flux primaire dudit moteur, ledit plancher de protection thermique étant monté sur ladite structure principale par l'intermédiaire de moyens de raccordement.

Selon l'invention, lesdits moyens de raccordement comportent une pluralité de languettes comprenant chacune une portion principale plane dont la largeur est orientée parallèlement à la direction transversale (Y) du carénage, ladite portion plane étant orientée de telle manière qu'en coupe selon un plan quelconque parallèle aux directions longitudinale (X) et verticale (Z) traversant la portion principale plane, cette dernière prend la forme d'un segment de droite orthogonal localement audit plancher de protection thermique. De plus, lesdites languettes sont conçues de manière à pouvoir se déformer pour accompagner un déplacement dudit plancher de protection thermique relativement à ladite structure principale du carénage, en cas de dilatation thermique différentielle entre ces deux entités.

La solution procurée par la présente invention permet donc d'améliorer la gestion de la dilatation thermique différentielle entre la structure principale du carénage et le plancher, en particulier dans la direction de la longueur de ce dernier, à savoir sensiblement selon la direction longitudinale. En effet, les languettes agencées de la manière définie ci-dessus permettent d'accompagner de manière très satisfaisante la dilatation du bouclier thermique dans de la sens de sa longueur, en limitant fortement, voire même en interdisant entièrement les déformations parasites du plancher selon d'autres directions. Cette déformation prend alors préférentiellement la forme d'une courbure des languettes selon des axes parallèles à la direction transversale, correspondant au mode privilégié de déformation de ces languettes.

Le plancher n'est donc pas monté rigidement sur la structure principale du carénage, ce qui lui permet avantageusement de se déformer plus librement par dilatation thermique suite à l'importante chaleur dégagée par le flux primaire épousant ce plancher. Cela est non seulement vérifié pour la déformation par dilatation dans la direction de la longueur, mais également pour la déformation par dilatation dans la direction transversale.

Les contraintes thermomécaniques subies par le plancher suite à de telles dilatations, par rapport à celles subies dans les réalisations antérieures, sont largement diminuées. Les potentielles déformations localisées susceptibles de dégrader la qualité aérodynamique de ce plancher sont de ce fait également fortement diminuées. Il en résulte une amélioration de la qualité aérodynamique globale du carénage, diminuant sensiblement les effets de traînée parasite et améliorant par la même le rapport performance/consommation de l'aéronef.

L'ensemble des avantages indiqués ci-dessus sont accentués par le fait qu'il est également préférentiellement supprimé la liaison mécanique rigide directe entre le plancher et les panneaux latéraux, de manière à créer une coupure mécanique s'étendant longitudinalement entre ces éléments, le plancher pouvant donc se dilater sans entraîner les panneaux latéraux.

Par ailleurs, il est noté que orientation particulière des portions principales planes des languettes, à savoir localement orthogonalement au plancher de protection thermique, permet de résister très correctement à la pression acoustique s'exerçant normalement à la surface extérieure de ce plancher. Les languettes sont en effet particulièrement bien adaptées pour résister fortement en compression, selon la direction de la longueur des portions planes, à la pression acoustique élevée rencontrée durant certains régimes moteur, tout en offrant la souplesse recherchée lorsqu'elles sont sollicitées selon la direction de la longueur du plancher, lors de la dilatation thermique de ce dernier.

De préférence, lesdites languettes sont réparties par rangées transversales, ces rangées étant espacées les unes des autres selon la direction longitudinale (X). Les rangées permettent de gérer au mieux la dilatation thermique du plancher selon la direction transversale, sans trop contraindre ce même plancher. Pour accentuer ce bénéfice, au sein de chaque rangée, les languettes sont préférentiellement espacées les unes des autres.

De préférence, chaque languette présente une première extrémité agencée du côté du plancher, ainsi qu'une seconde extrémité agencée du côté de ladite structure principale du carénage.

A cet égard, ladite première extrémité fait de préférence partie intégrante de ladite portion principale plane, et est fixée sur un support raidisseur lui-même fixé sur le plancher. Le raidisseur reste néanmoins optionnel, une fixation directe pouvant être envisagée, sans sortir du cadre de l'invention.

De plus, ladite seconde extrémité prolonge de préférence ladite portion principale plane en étant courbée selon un axe de courbure parallèle à la direction transversale. La courbure peut suivre un arc de cercle. Quoi qu'il en soit, la déformation de chaque languette accompagnant la dilatation thermique du plancher se caractérise par l'accentuation de la courbure de la seconde extrémité, et/ou par la courbure de la portion principale plane.

De préférence, chaque languette présente une épaisseur comprise entre 0,5 et 5 mm, et une longueur totale, prise selon la direction de la longueur de sa portion principale plane, comprise entre 50 et 200 mm.

De préférence, la longueur de la portion principale plane de chaque languette représente 50 à 95% de la longueur totale de la languette, prise selon la direction de la longueur de cette portion principale plane.

De préférence, la structure principale du carénage et le plancher de protection thermique sont équipés de moyens de butée permettant de bloquer le déplacement dudit plancher de protection thermique relativement à ladite structure principale du carénage, préférentiellement selon la direction X.

De préférence, ledit plancher de protection thermique est dépourvu de liaison mécanique rigide directe avec lesdits panneaux latéraux du carénage. A titre d'exemple indicatif, ces panneaux sont uniquement rapportés indirectement sur le plancher de protection thermique, par l'intermédiaire des languettes, elles-mêmes fixées sur d'autres éléments de la structure principale assurant la liaison des deux panneaux latéraux. En d'autres termes, cela revient à faire en sorte qu'il existe une coupure mécanique longitudinale entre le plancher et chacun des panneaux latéraux.

L'invention a aussi pour objet un dispositif d'accrochage d'un moteur destiné à être interposé entre une voilure d'aéronef et le moteur, ce dispositif comprenant un carénage aérodynamique arrière tel que décrit ci-dessus.

En outre, l'invention a également pour objet un ensemble moteur comprenant un moteur tel qu'un turboréacteur et un dispositif d'accrochage de ce moteur, ce dispositif étant conforme à celui qui vient d'être évoqué.

Enfin, un autre objet de la présente invention est un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un dispositif d'accrochage selon un mode de réalisation préféré de la présente invention ;
- la figure 2 représente une vue partielle en perspective du carénage aérodynamique arrière équipant le dispositif d'accrochage montré sur la figure 1, ce carénage étant également objet de la présente invention ;
- la figure 3 représente une vue agrandie en perspective d'une partie du carénage montré sur la figure 2, coupé transversalement ;
- la figure 4 représente une vue agrandie en perspective d'une partie du carénage montré sur la figure 2, coupé longitudinalement ;
- la figure 5 représente une vue en coupe transversale prise le long de la ligne V-V de la figure 2 ; et
- la figure 6 représente une vue schématique en coupe transversale prise le long de la ligne VI-VI de la figure 5 ;
- la figure 7 représente une vue similaire à celle de la figure 6, en configuration adoptée durant le fonctionnement du moteur, provoquant une dilatation thermique différentielle entre le plancher de protection thermique et la structure principale du carénage.

### EXPOSÉ DÉTAILLÉ DE MODES DE RÉALISATION PRÉFÉRÉS

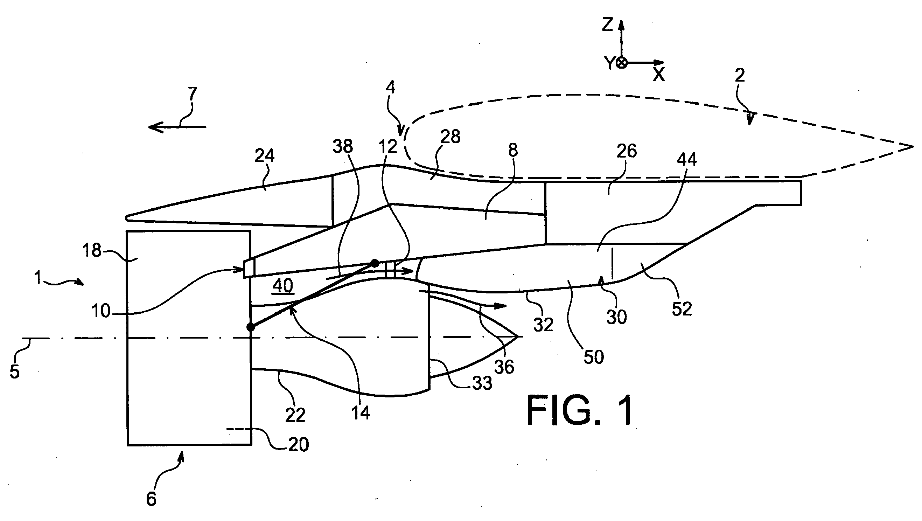

En référence à la figure 1, on voit un ensemble moteur 1 pour aéronef destiné à être fixé sous une aile 2 de cet aéronef, cet ensemble 1 comportant un dispositif d'accrochage 4 selon un mode de réalisation préféré de la présente invention, ainsi qu'un moteur 6 tel qu'un turboréacteur accroché sous ce dispositif 4.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le dispositif d'accrochage 4 comporte une autre série d'attaches (non représentées) rapportées sur la structure rigide 8 et permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6 et à celle du carénage aérodynamique arrière qui sera présenté ci-après, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6 et à celle du carénage aérodynamique arrière, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut donc voir les deux attaches moteur 10, 12, le dispositif de reprise des efforts de poussée 14, la structure rigide 8 du dispositif d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrites ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est pourvu de nervures transversales (non représentées) prenant chacune la forme d'un rectangle orienté dans un plan YZ.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18. L'attache moteur avant 10 est conçue de manière classique et connue de l'homme du métier.

D'autre part, l'attache moteur arrière 12, également réalisée de façon classique et connue de l'homme du métier, est quant à elle interposée entre la structure rigide 8 et le carter central 22.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière 30, dit carénage aérodynamique arrière inférieur dans cette configuration où le moteur est situé sous l'aile.

Globalement, ces structures secondaires sont des éléments classiques identiques ou similaires à ceux rencontrés dans l'art antérieur, et connus de l'homme du métier, à l'exception du carénage aérodynamique arrière 30 qui sera détaillé ci-dessous.

Plus précisément, la structure aérodynamique avant 24 est placée dans le prolongement avant inférieur de la voilure 2 et au-dessus de la structure primaire 8. Elle est montée fixement sur la structure rigide 8, et présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de carénage aérodynamique, mais permet également la mise en place, la ségrégation et le cheminement de différents systèmes (air, électrique, hydraulique, carburant). De plus, la partie avant de cette structure 24 n'étant pas au contact de la structure rigide 8, il est habituellement interposé un échangeur thermique dans l'espace défini entre ces deux éléments.

Directement dans le prolongement arrière de cette structure 24, toujours sous la voilure et monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient une partie des équipements du mât. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière 30, également appelé « bouclier » ou « Aft Pylon Fairing ». Ses fonctions essentielles sont la formation d'une barrière thermique également dite anti-feu servant à protéger le mât et la voilure de la chaleur dégagée par le flux primaire, et la formation d'une continuité aérodynamique entre la sortie du moteur et le mât d'accrochage.

De manière connue de l'homme du métier, le carénage 30 précité comporte un plancher de protection thermique 32 pourvu d'une surface extérieure destinée à être épousée par un flux primaire du moteur qu'il délimite partiellement radialement vers l'extérieur, ce flux primaire s'échappant de la tuyère 33 du moteur étant représenté schématiquement par la flèche 36. Par ailleurs, le carénage 30 comporte aussi deux panneaux latéraux 44 qui sont quant à eux prévus pour être épousés extérieurement par un flux secondaire du moteur représenté schématiquement par la flèche 38, en raison de leur implantation dans le canal annulaire 40 de flux secondaire du moteur, et/ou en sortie de celui-ci.

Il est noté que dans le mode de réalisation préféré décrit où le moteur 6 est destiné à être suspendu sous la voilure de l'aéronef, le plancher 32 de protection thermique du mât et de la voilure vis-à-vis du flux primaire 36, constitue une portion inférieure du carénage 30. Naturellement, ce plancher constituerait une portion supérieure du carénage dans le cas alternatif où le moteur serait destiné à être implanté au-dessus de la voilure.

Enfin, comme cela est visible sur la figure 1, il est prévu que l'extrémité avant du plancher 32 vienne épouser l'extrémité arrière supérieure de la tuyère 33, ou bien qu'elle soit fortement rapprochée de cette même extrémité arrière de tuyère 33.

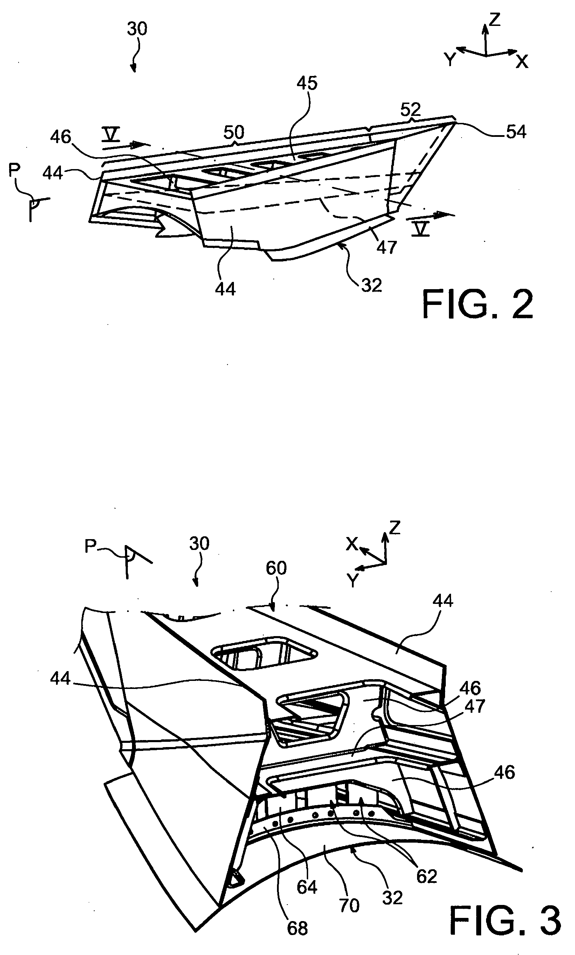

En référence à présent aux figures 2 à 6, on peut apercevoir de façon plus détaillée le carénage aérodynamique arrière 30, qui prend la forme générale d'un caisson destiné à être monté sur la structure aérodynamique arrière 26 et la structure rigide 8. Le carénage 30 présente de préférence un plan de symétrie P correspondant à un plan XZ, ce plan P constituant également un plan vertical de symétrie pour l'ensemble du dispositif d'accrochage 4, et pour le moteur 6.

En référence plus particulièrement à la figure 2, le carénage aérodynamique arrière 30 en forme de caisson comprend les deux panneaux latéraux 44 chacun grossièrement orienté dans un plan XZ, de part et d'autre du plan P. Ils sont assemblés entre eux par un longeron supérieur 45, un longeron intermédiaire 47 et des nervures intérieures transversales de rigidification 46 espacées les unes des autres selon la direction X, chacune de ces nervures 46 étant orientée selon un plan YZ et prenant par exemple la forme globale d'un rectangle, d'un carré ou d'un U. Les longerons 45, 47 s'étendent quant à eux sensiblement parallèlement l'un à l'autre, selon des plans XY, et sont éventuellement ajourés.

Les panneaux latéraux 44, éventuellement chacun scindé en une portion supérieure et une portion inférieure, sont montés fixement et directement sur les portions latérales de chacune des nervures intérieures 46, à l'aide de moyens conventionnels connus de l'homme du métier. Il en est de même pour leur montage sur les chants longitudinaux des longerons 45, 47.

D'autre part, le carénage 30 intègre le plancher de protection thermique 32 en partie inférieure du caisson, ce plancher s'étendant également sensiblement parallèlement aux longerons 45, 47.

Toujours sur cette même figure 2, on peut apercevoir que le carénage 30 se décompose en deux portion distinctes mais solidaires l'une de l'autre, à savoir une portion avant 50 constituant la majeure partie du carénage, par exemple 60 à 85 % de celui-ci en terme de longueur selon la direction X, et une faible portion arrière 52 prenant globalement la forme d'une pyramide ou d'une pointe dont la base et reliée rigidement à la portion avant 50, et dont le sommet 54 constitue une extrémité arrière du carénage 30. A titre indicatif, la portion avant 50 présente une section transversale grossièrement homogène sur toute sa longueur.

Les panneaux latéraux 44, ou leurs portions inférieure et supérieure, s'étendent de préférence chacun d'une seule pièce d'un bout à l'autre du carénage 30, c'est-à-dire à la fois le long de la portion avant 50, et le long de la portion arrière 52. En revanche, le plancher de protection thermique 32 s'étend lui de préférence d'une seule pièce uniquement sur une partie au moins de la portion avant 50, et non sur la portion arrière 52, même si cela pourrait bien entendu être envisagé, sans sortir du cadre de l'invention. Cette particularité s'explique notamment par le fait que la portion arrière 52 en forme de pyramide s'éloigne progressivement de l'axe du moteur, de sorte que le flux primaire, qui perd en intensité de chaleur en allant vers l'arrière, provoque une incidence thermique moindre sur l'élément inférieur de fermeture de la pyramide 52.

En outre, il est indiqué que le fait de prévoir chacun des éléments mentionnés ci-dessus d'une seule pièce n'exclut pas la possibilité de les fabriquer à l'aide de plusieurs portions distinctes rapportées fixement les unes aux autres, comme par exemple plusieurs portions se succédant selon la direction X.

En référence à présent aux figures 3 à 6, on peut voir de manière plus détaillée le carénage 30. Les nervures 46 se répartissent en des nervures supérieures reliant les longerons 45, 47, et des nervures inférieures prolongeant vers le bas les nervures supérieures, à partir du longeron intermédiaire 47. Les nervures supérieures sont de forme carrée ou rectangulaire, tandis que les nervures inférieures sont en forme de U retourné. La fixation de ces nervures 46 sur les longerons 45, 47 s'effectue préférentiellement à l'aide de semelles prévues sur ces nervures, par soudage ou boulonnage. Leur fixation sur les panneaux latéraux 44 peut s'effectuer de manière analogue, ou bien directement sur le chant de ces nervures, également par soudage ou boulonnage.

Les longerons 45, 47, les nervures 46 et les panneaux latéraux 44 forment ensemble une structure principale 60, dont les éléments constitutifs sont rigidement fixés les uns aux autres. Cette structure 60 porte le plancher 32 avec une certaine souplesse, à l'aide de moyens de raccordement spécifiques à la présente invention, qui vont à présent être décrits.

Ces moyens comprennent une pluralité de languettes métalliques 62, de préférence en acier inoxydable, réparties en rangées transversales. Ces rangées, par exemple au nombre de trois, sont espacées les unes des autres selon la direction X. Elles intègrent chacune plusieurs languettes 62 parallèles entre elles, et espacées les unes des autres selon la direction Y. A titre d'exemple indicatif, chaque rangée comprend six languettes 62.

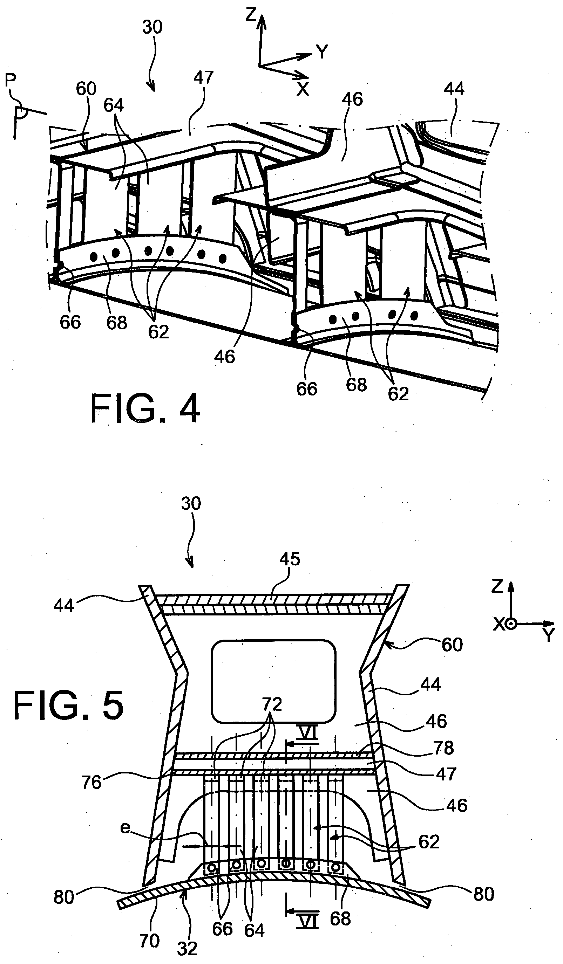

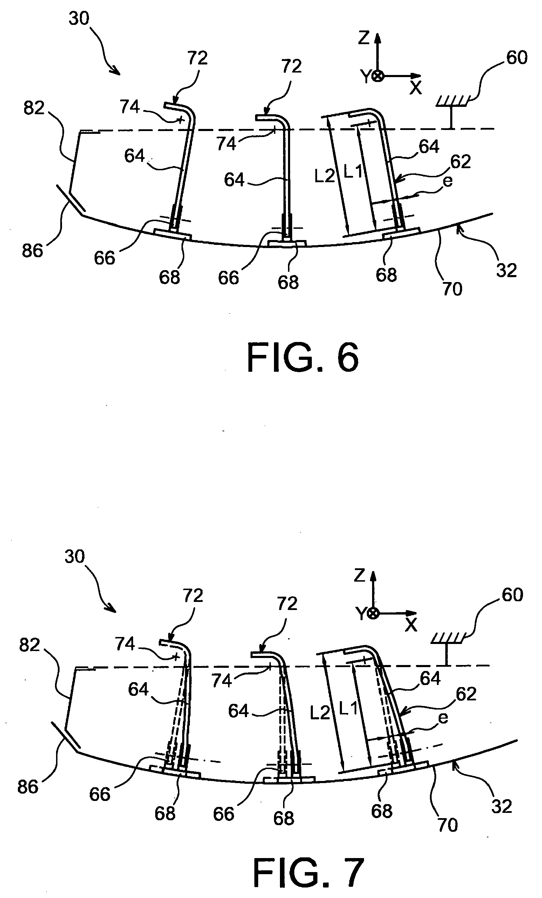

En référence plus spécifiquement aux figures 5 et 6, il va être décrit l'une des languettes 62, sachant que celles-ci présentent toutes une conception identique ou similaire, qui leur confère une certaine souplesse afin de pouvoir être en mesure d'accompagner un déplacement du plancher de protection thermique 32 relativement à la structure principale 60, en cas de dilatation thermique différentielle entre ces deux entités.

Chaque languette 62 présente une largeur « 1 » et une épaisseur « e » constantes, des valeurs de l'ordre de 10 à 100 mm pouvant être adoptées pour la largeur, et des valeurs de l'ordre de 0,5 à 5 mm pouvant être adoptées pour l'épaisseur. Ces valeurs sont par ailleurs identiques pour chacune des languettes, contrairement à leur longueur qui peut varier en fonction de la géométrie du plancher 32 qu'elles supportent.

A cet égard, il est noté que chaque languette 62 présente une portion principale droite 64, dont la longueur L1 peut être de l'ordre de 25 à 190 mm. Cette portion principale droite 64 forme l'essentiel de la languette, la longueur L1 correspondant en effet à 50 à 95% de la longueur totale L2 de la languette, référencée sur la figure 6. Ainsi, cette longueur L2 peut être de l'ordre de 50 à 200 mm.

Chaque languette comporte une première extrémité 66, qui fait ici partie intégrante de la portion droite 64. Elle est assemblée, de préférence par boulonnage, sur un support raidisseur 68 lui-même soudé sur la surface intérieure du plancher 32. Il est noté que les extrémités 66 de toutes les languettes d'une même rangée sont assemblées sur un même support raidisseur 68, par exemple de section en forme de T retourné, et s'étendant sensiblement transversalement sur toute la largeur du plancher 32.

La languette 62 comporte également une seconde extrémité 72 qui prolonge la portion plane 64, en présentant une courbure, de préférence en forme d'arc de cercle, dont l'axe de courbure est parallèle à la direction Y. La courbure permet par exemple d'obtenir un angle d'environ 90° entre la portion plane 64 qu'elle prolonge, et la partie terminale plane de l'extrémité 72.

La languette forme donc un L retourné, dont la base correspondant à la partie terminale mentionnée ci-dessus sert à la fixation sur le longeron intermédiaire 47. Plus précisément en référence à la figure 5, la partie terminale de l'extrémité 72 est en appui contre la semelle supérieure 76 de la nervure inférieure 46, elle-même en appui contre le longeron intermédiaire 47. Les boulons utilisés pour la fixation de la languette peuvent donc traverser tous ces éléments, y compris la semelle inférieure 78 de la nervure supérieure 46 en appui sur le longeron 47.

Alternativement, dans le cas où la portion plane 64 représente 100% de la languette, alors celle-ci est directement montée sur l'âme de la nervure 46.

L'orientation des languettes 62 est telle que les portions principales planes 64 soient parallèles à la direction Y, avec la largeur « 1 » orientée parallèlement à cette même direction. De plus, pour chacune de ces portions 64, en coupe selon un plan quelconque XZ traversant la portion principale plane 64, tel que le plan de coupe de la figure 6, cette portion 64 prend la forme d'un segment de droite orthogonal localement au plancher 32, et donc à sa surface aérodynamique 70.

Les languettes 62 assurent à elles seules la suspension du plancher 32 sur la structure principale 60 du carénage. En particulier, il n'est prévu aucune liaison mécanique directe et rigide entre les panneaux latéraux 44 et ce plancher, des jeux 80 étant même éventuellement prévus entre ces éléments.

Sur la figure 6, il est montré que la structure principale 60 est équipée, à son extrémité avant, d'une butée 82. Cette butée coopère avec une butée complémentaires 86 prévue à l'extrémité avant du plancher 32. A l'état de non-fonctionnement du moteur tel que représenté sur la figure 6, les butées sont en contact ou en regard avec un faible jeu, afin de limiter le déplacement relatif entre le plancher et la structure 60, selon la direction X, un tel déplacement étant effectivement susceptible de survenir en raison de la souplesse des languettes 62.

Lors du fonctionnement du moteur, la dilatation thermique du plancher est supérieure à la dilation thermique de la structure principale 60, pour les raisons déjà invoquées précédemment. Lors de ces phases de dilatation thermique différentielle, les languettes 62 accompagnent le déplacement relatif entre ces éléments en se déformant selon leur mode privilégié de déformation, les conduisant chacune à se courber / fléchir selon un axe parallèle à la largeur, c'est-à-dire parallèle à la direction Y. La courbure peut concerner la portion plane 64 et/ou la seconde extrémité courbe 72. Une telle configuration est montrée sur la figure 7, sur laquelle il est possible d'apercevoir que la déformation par dilatation du plancher selon la direction X s'effectue à partir du contact entre les butées 82, 86, qui bloquent ce plancher selon cette même direction X.

Durant les phases de dilatation thermique différentielle, les languettes 62 accompagnent le déplacement relatif entre ces éléments selon la direction Y, en se déformant légèrement selon cette même direction. Leur faible largeur favorise une telle déformation.

L'orthogonalité des portions droites 64 des languettes, localement vis-à-vis du plancher 32, permet à ce dernier de se déformer essentiellement selon la direction de sa longueur, et donc de limiter les déplacement verticaux. Les jeux entre le plancher 32 et les panneaux latéraux sont ainsi conservés même durant les phases de fonctionnement du moteur au cours desquelles le phénomène de dilatation thermique différentielle, exposé ci-dessus, se produit.

Enfin, il est indiqué que les éléments de la structure principale 60 peuvent être métalliques ou réalisés en matériau composite, tandis que le plancher est lui préférentiellement métallique, par exemple en titane ou Inconel. D'autres matériaux peuvent néanmoins être envisagés pour réaliser ce plancher, par exemple en céramique, composite, etc.

Bien entendu, diverses modifications peuvent être apportées par l'homme du métier à l'invention qui vient d'être décrite, uniquement à titre d'exemples non limitatifs. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure.

## Revendications

1. Carénage aérodynamique arrière (30) pour dispositif d'accrochage (4) d'un moteur (6) destiné à être interposé entre une voilure (2) d'aéronef et ledit moteur (6), ledit carénage formant caisson comprenant une structure principale (60) s'étendant selon une direction longitudinale (X) du carénage et intégrant deux panneaux latéraux (44) reliés entre eux, le carénage comprenant en outre un plancher de protection thermique (32) pourvu d'une surface extérieure (70) destinée à être épousée par un flux primaire (36) dudit moteur, ledit plancher de protection thermique (32) étant monté sur ladite structure principale (60) par l'intermédiaire de moyens de raccordement,
**caractérisé en ce que** lesdits moyens de raccordement comportent une pluralité de languettes (62) comprenant chacune une portion principale plane (64) dont la largeur (1) est orientée parallèlement à la direction transversale (Y) du carénage, ladite portion plane (64) étant orientée de telle manière qu'en coupe selon un plan quelconque parallèle aux directions longitudinale (X) et verticale (Z) traversant la portion principale plane, cette dernière prend la forme d'un segment de droite orthogonal localement audit plancher de protection thermique (32),
et **en ce que** lesdites languettes (62) sont conçues de manière à pouvoir se déformer pour accompagner un déplacement dudit plancher de protection thermique (32) relativement à ladite structure principale (60) du carénage, en cas de dilatation thermique différentielle entre ces deux entités.

2. Carénage selon la revendication 1, **caractérisé en ce que** lesdites languettes (62) sont réparties par rangées transversales, ces rangées étant espacées les unes des autres selon la direction longitudinale (X).

3. Carénage selon la revendication 1 ou la revendication 2, **caractérisé en ce que** chaque languette (62) présente une première extrémité (66) agencée du côté du plancher (32), ainsi qu'une seconde extrémité (72) agencée du côté de ladite structure principale (60) du carénage.

4. Carénage selon la revendication 3, **caractérisé en ce que** ladite première extrémité (66) fait partie intégrante de ladite portion principale plane (62), et **en ce qu'**elle est fixée sur un support raidisseur lui-même fixé sur le plancher (32).

5. Carénage selon la revendication 3 ou la revendication 4, **caractérisé en ce que** ladite seconde extrémité (72) prolonge ladite portion principale plane (64) en étant courbée selon un axe de courbure (72) parallèle à la direction transversale (Y).

6. Carénage selon l'une quelconque des revendications précédentes, **caractérisé en ce que** chaque languette (62) présente une épaisseur (e) comprise entre 0,5 et 5 mm, et une longueur totale (L2), prise selon la direction de la longueur de sa portion principale plane (64), comprise entre 50 et 200 mm.

7. Carénage aérodynamique selon l'une quelconque des revendications précédentes, **caractérisé en ce que** la longueur (L1) de la portion principale plane (64) de chaque languette (62) représente 50 à 95% de la longueur totale (L2) de la languette, prise selon la direction de la longueur de cette portion principale plane.

8. Carénage aérodynamique selon l'une quelconque des revendications précédentes, **caractérisé en ce que** la structure principale (60) du carénage et le plancher de protection thermique (32) sont équipés de moyens de butée (82, 86) permettant de bloquer le déplacement dudit plancher de protection thermique (32) relativement à ladite structure principale (60) du carénage.

9. Carénage aérodynamique selon l'une quelconque des revendications précédentes, **caractérisé en ce que** ledit plancher de protection thermique (32) est dépourvu de liaison mécanique rigide directe avec lesdits panneaux latéraux (44) du carénage.

10. Dispositif d'accrochage (4) d'un moteur (6) destiné à être interposé entre une voilure (2) d'aéronef et ledit moteur (6), **caractérisé en ce qu'**il comprend un carénage aérodynamique arrière (30) selon l'une quelconque des revendications précédentes.

11. Ensemble moteur (1) comprenant un moteur (6) et un dispositif d'accrochage (4) du moteur (6) selon la revendication 10.

12. Aéronef comprenant au moins un ensemble moteur (1) selon la revendication 11.

## Patentansprüche

1. Aerodynamische Heckverkleidung (30) für eine Aufhängungsvorrichtung (4) eines Motors (6), die dazu bestimmt ist, zwischen einer Tragfläche (2) eines Luftfahrzeugs und dem Motor (6) eingefügt zu werden, wobei die Verkleidung einen Kasten bildet, der eine Hauptstruktur (60) enthält, die sich in einer Längsrichtung (X) der Verkleidung erstreckt und zwei miteinander verbundene Seitenplatten (44) umfasst, wobei die Verkleidung außerdem einen Wärmeschutzboden (32) enthält, der mit einer Außenfläche (70) versehen ist, an die sich ein Primärstrom (36) des Motors anpassen soll, wobei der Wärmeschutzboden (32) mit Hilfe von Verbindungseinrichtungen auf die Hauptstruktur (60) montiert wird,
**dadurch gekennzeichnet, dass** die Verbindungseinrichtungen eine Vielzahl von Zungen (62) aufweisen, die je einen ebenen Hauptabschnitt (64) enthalten, dessen Breite (1) parallel zur Querrichtung (Y) der Verkleidung ausgerichtet ist, wobei der ebene Abschnitt (64) so ausgerichtet ist, dass im Schnitt gemäß einer beliebigen Ebene parallel zu den den ebenen Hauptabschnitt durchquerenden Längs- (X) und senkrechten Richtungen (Z) letzterer die Form eines Geradensegments lokal orthogonal zum Wärmeschutzboden (32) annimmt,
und dass die Zungen (62) so konzipiert sind, dass sie sich verformen können, um im Fall einer unterschiedlichen Wärmeausdehnung zwischen diesen zwei Einheiten eine Verschiebung des Wärmeschutzbodens (32) bezüglich der Hauptstruktur (60) der Verkleidung zu begleiten.

2. Verkleidung nach Anspruch 1, **dadurch gekennzeichnet, dass** die Zungen (62) in Querreihen verteilt sind, wobei diese Reihen in Längsrichtung (X) einen Abstand zueinander haben.

3. Verkleidung nach Anspruch 1 oder Anspruch 2, **dadurch gekennzeichnet, dass** jede Zunge (62) ein erstes Ende (66), das auf der Seite des Bodens (32) angeordnet ist, sowie ein zweites Ende (72) aufweist, das auf der Seite der Hauptstruktur (60) der Verkleidung angeordnet ist.

4. Verkleidung nach Anspruch 3, **dadurch gekennzeichnet, dass** das erste Ende (66) integraler Bestandteil des ebenen Hauptabschnitts (62) ist, und dass es an einem Versteifungsträger befestigt ist, der selbst am Boden (32) befestigt ist.

5. Verkleidung nach Anspruch 3 oder Anspruch 4, **dadurch gekennzeichnet, dass** das zweite Ende (72) den ebenen Hauptabschnitt (64) verlängert, indem es gemäß einer Krümmungsachse (72) parallel zur Querrichtung (Y) gekrümmt ist.

6. Verkleidung nach einem der vorhergehenden Ansprüche, **dadurch gekennzeichnet, dass** jede Zunge (62) eine Dicke (e) zwischen 0,5 und 5 mm und eine Gesamtlänge (L2) gesehen in Richtung der Länge ihres ebenen Hauptabschnitts (64) zwischen 50 und 200 mm aufweist.

7. Aerodynamische Verkleidung nach einem der vorhergehenden Ansprüche, **dadurch gekennzeichnet, dass** die Länge (L1) des ebenen Hauptabschnitts (64) jeder Zunge (62) 50 bis 95% der Gesamtlänge (L2) der Zunge gesehen in Richtung der Länge dieses ebenen Hauptabschnitts darstellt.

8. Aerodynamische Verkleidung nach einem der vorhergehenden Ansprüche, **dadurch gekennzeichnet, dass** die Hauptstruktur (60) der Verkleidung und der Wärmeschutzboden (32) mit Anschlageinrichtungen (82, 86) ausgestattet sind, die es ermöglichen, die Verschiebung des Wärmeschutzbodens (32) bezüglich der Hauptstruktur (60) der Verkleidung zu blockieren.

9. Aerodynamische Verkleidung nach einem der vorhergehenden Ansprüche, **dadurch gekennzeichnet, dass** der Wärmeschutzboden (32) keine direkte steife mechanische Verbindung mit den Seitenplatten (44) der Verkleidung hat.

10. Aufhängungsvorrichtung (4) eines Motors (6), die dazu bestimmt ist, zwischen einer Tragfläche (2) eines Luftfahrzeugs und den Motor (6) eingefügt zu werden, **dadurch gekennzeichnet, dass** sie eine aerodynamische Heckverkleidung (30) nach einem der vorhergehenden Ansprüche enthält.

11. Motoreinheit (1), die einen Motor (6) und eine Aufhängungsvorrichtung (4) des Motors (6) nach Anspruch 10 enthält.

12. Luftfahrzeug, das mindestens eine Motoreinheit (1) nach Anspruch 11 enthält.

## Claims

1. Aft pylon fairing (30) of a suspension system (4) for an engine (6), designed to be inserted between a wing (2) of an aircraft and said engine (6), said fairing forming a box comprising a main structure (60) extending along a longitudinal direction (X) of the fairing and integrating two side panels (44) connected to each other, the fairing also comprising a heat protection deck (32) provided with an outer surface (70) that delimits a core engine flow (36) from said engine, said heat protection deck (32) being mounted on said main structure (60) through connection means,
**characterised in that** said connection means comprise a plurality of tabs (62) each comprising a plane main portion (64) the width (1) of which is oriented parallel to the transverse direction (Y) of the fairing, said plane portion (64) being oriented such that in a section along any plane parallel to the longitudinal (X) and vertical (Z) directions passing through the plane main portion, this plane main portion is in the form of a straight segment locally orthogonal to said heat protection deck (32),
and **in that** said tabs (62) are designed so that they can deform to accompany displacement of said heat protection deck (32) relative to said main structure (60) of the fairing if there is differential thermal expansion between these two entities.

2. Fairing according to claim 1, **characterised in that** said tabs (62) are distributed in transverse rows, these rows being at a spacing from each other along the longitudinal (X) direction.

3. Fairing according to claim 1 or claim 2, **characterised in that** each tab (62) has a first end (66) arranged at the deck end (32), and a second end (72) arranged at said main structure (60) of the fairing.

4. Fairing according to claim 3, **characterised in that** said first end (66) forms an integral part of the said plane main portion (62), and is fixed onto a stiffener support itself fixed to the deck (32).

5. Fairing according to claim 3 or claim 4, **characterised in that** said second end (72) prolongs said plane main portion (64) being curved along an axis of a curvature (72) parallel to the transverse direction (Y).

6. Fairing according to any one of the previous claims, **characterised in that** each tab (62) has a thickness (e) of between 0.5 and 5 mm, and a total length (L2) of between 50 and 200 mm along the length direction of its plane main portion (64).

7. Pylon fairing according to any one of the previous claims, **characterised in that** the length (L1) of the plane main portion (64) of each tab (62) represents 50 to 95% of the total length (L2) of the tab, along the length direction of this plane main portion.

8. Pylon fairing according to any one of the previous claims, **characterised in that** the main structure (60) of the fairing and the heat protection deck (32) are fitted with stop means (82, 86) to block displacement of said heat protection deck (32) relative to said main fairing structure.

9. Pylon fairing according to any one of the previous claims, **characterised in that** said heat protection deck (32) and said two longitudinal walls (58) do not have any rigid direct mechanical link with said side panels (44) of the fairing.

10. Suspension system (4) for an engine (6) designed to be inserted between an aircraft wing (2) and said engine (6), **characterised in that** it comprises an aft pylon fairing (30) according to any one of the previous claims.

11. Engine assembly (1) comprising an engine (6) and a suspension system (4) for the engine (6) according to claim 10.

12. Aircraft comprising at least one engine assembly (1) according to claim 11.
